# EUROPEAN PATENT SPECIFICATION

(11) **EP 1 997 597 B1**
(45) Date of publication and mention of the grant of the patent: **03.04.2019**
(21) Application number: 08156526.9
(22) Date of filing: 20.05.2008
(51) Int. Cl.: B27D 1/06, A47B 96/20

(54) **Apparatus and method for edge-banding panels and edge-banded composite panel**
Vorrichtung und Verfahren zur Kantenumleimung und Verbundplatte mit angebrachten Kantenbanden
Appareil et procédé pour appliquer un bord de protection et panneau composite avec des bords

(30) Priority: 21.05.2007 IT MO20070168
(43) Date of publication of application: 03.12.2008
(73) Proprietor: SCM Group S.p.A., 47900 Rimini (IT)
(72) Inventor: Neri, Alessandro, 47900, Rimini (RN) (IT)
(74) Representative: Crugnola, Pietro

(56) References cited:
- EP-A1- 1 961 533
- DE-A1- 1 504 239
- DE-B- 1 033 499
- GB-A- 1 249 097
- US-A- 2 833 003
- US-A- 5 312 504
- US-A- 5 433 563

## Description

The invention substantially relates to a tool according to the preamble of claim 1 and a method for edge-banding a panel according to the preamble of claim 15. Such a tool and such a method are known from document GB1249097A.

This type of panel, used for making furniture in general, doors, or other furnishing elements, has an inner structure that is generally made of cardboard, whilst the laminar elements can be made of plastics, wood or the like. Apparatuses are known comprising a cutting tool, generally a milling cutter, which is driven so as to run along the edge of a panel to be edge-banded so as to remove a part of the honeycomb structure and obtain a groove in which a supporting strip is subsequently glued that provides an externally smooth and continuous surface onto which a finishing strip can be glued.

The supporting strip has to be applied to the panel inasmuch as the internal honeycomb structure is not in itself suitable for receiving the finishing strip in a stable manner.

A drawback of apparatuses of known type is that they force both the supporting strip and the finishing strip to be applied, which entails a certain degree of machining complexity and requires expensive equipment.

GB1249097A discloses a milling device for removing the projecting longitudinal edges of strip material which has been secured to the peripheral surfaces of flat workpieces. US5433563A describes a tool for preparing a substrate edge of a counter-top to accept a moulded apron having at least two perpendicular appendages. The tool includes cutters for cutting a channel and/or a rabbet into the substrate edge. The spacing between the cutting edges of the cutters corresponds to a spacing between the perpendicular appendages of the moulded apron.

An object of the invention is to improve edge-banding of panels.

Another object is to simplify edge-banding of panels, in particular having a honeycomb structure.

A further object is to make panel available that has a simpler and less costly structure

In a first aspect of the invention, an apparatus is provided as defined in claim 1.

In this manner, it is possible to coat an edge of a panel having an internal honeycomb structure without having to apply a supporting strip, because the supporting function is performed by the peripheral part of the honeycomb structure that is compacted by the action of the pressing element of the tool.

The finishing strip can be applied directly to the compacted outer surface of the honeycomb structure.

It is important for the pressing element not to be cutting, i.e. for it not to remove material from the panel during machining but to be shaped so as to perform effective compacting of the peripheral part of the panel.

In a second aspect of the invention, a method is provided for edge-banding a panel having an inner portion with a compressible structure comprised between two laminar elements that define the widest faces thereof, comprising removing peripheral portions of each laminar element for a certain depth and compressing the inner portion substantially of said depth so as to define a compressed part that is suitable for acting as a support for a finishing strip.

In this manner it is possible to apply an edge to composite panels without having to apply supporting strip, i.e. in a more simple and rapid manner.

The invention can be better understood and implemented with reference to the attached drawings, which illustrate some embodiments thereof by way of non-limiting example, in which:
Figure 1 is a perspective and fragmentary view of a composite panel;
Figure 2 is a very schematic perspective view of a tool for arranging an edge of composite panel on the application of a finishing strip;
Figure 3 is a longitudinal section taken along the axis of symmetry of the tool in Figure 2 and of a panel during machining;
Figure 4 is a very schematic and interrupted view that shows the interaction between a panel to be edge-banded and a tool like the one in Figure 2;
Figure 5 is a top view in Figure 4;
Figure 6 is a schematic and fragmentary top view of a panel and of an edge-banding unit during the application of a finishing strip;
Figure 7 is a section like that in Figure 3, but in an embodiment of the tool and of the panel.

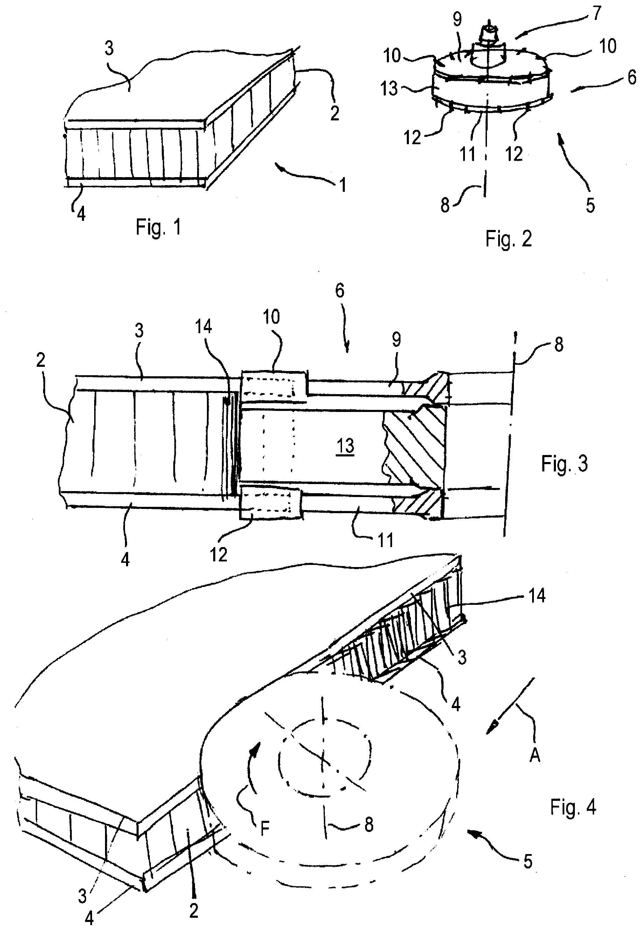

As shown in Figure 1, a composite panel 1 comprises a compressible internal part 2, for example made of cardboard, with a honeycomb structure, enclosed between a first laminar element 3 and a second laminar element 4 that form the visible faces of the panel 1.

With reference to Figures 2, a tool 5 comprises a tool body 6 and a shank 7 that is used for coupling a spindle, or electric spindle, with a machine tool that is not shown that rotates the tool body 6 around an axis 8.

As shown in Figure 3, the tool body 6 comprises a first tool part 9, peripherally provided with a first cutting peripheral crown 10 that has a height, measured along the axis 8, that is at least equal to or hardly greater than the thickness of the first laminar element 3. The tool body 6 further comprises a second tool part 11, peripherally provided with a second peripheral cutting crown 12 that has a height, measured along the axis 8, that is the same as or hardly greater than, the thickness of the second laminar element 4. The first tool part 9 and the second tool part 11 can be formed of disc-type milling cutters of conventional type, splined on a central hub that is not shown. Between the first tool part 9 and the second tool part 11 there is interposed a pressing element 13, having a diameter substantially corresponding to the diameter of the first tool part 9 and of the second tool part 11 and arranged for compressing a more outer peripheral portion 14 of the inner part 2 of the panel 1.

Alternatively, the pressing element 13 can have a greater diameter than the diameter of the first tool part 9 and of the second tool part 11.

The pressing element 13 can be symmetrical to the axis 8, for example the pressing element 13 can have a cylindrical shape, with an axis substantially coinciding with the axis 8, or a barrel shape.

Also the pressing element 13 can be splined like the first and the second tool part 9, 11 on the same hub.

In an alternative embodiment the pressing element 13 can be splined on the hub by revolving means, in particular by bearing means.

In this case the pressing element 13 can be induced to roll around the axis 8 at a speed different from the rotation speed of the first tool part 9 and of the second tool part 11. In particular the pressing element 13, by interacting with the peripheral portion 14, can be made to rotate at a speed that is substantially the same as the advancing speed of the tool 5 along the advance direction A.

Alternatively, the pressing element 13 can be rotated by rotating means that is not shown, at any speed.

In a further embodiment the pressing element 13 might not rotate around the axis 8.

As shown in Figure 4, in which the operating zone of the tool 5 is shown by a dot-and-dash line, the peripheral portion 14 is formed by bending the laminae of the honeycomb structure in a direction opposite the advance direction A of the tool 5, which is rotated around the axis 8 in a direction indicated by the arrow F.

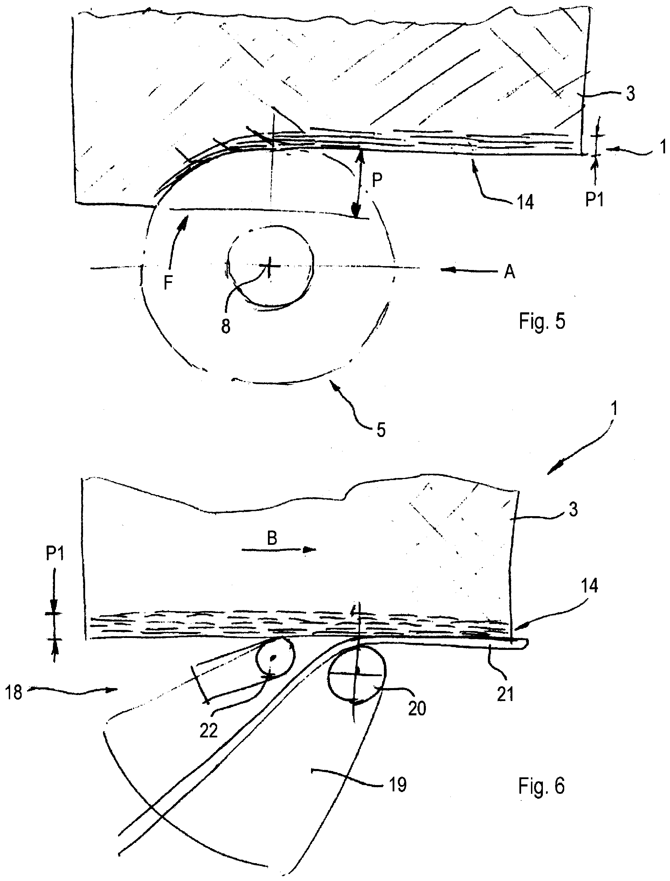

As shown in Figure 5, the compressed peripheral portion 14 may be more or less extended: in particular, if the tool 5 is advanced in the direction A at a greater cutting depth P, the peripheral portion 14 occupies a more extended depth PI, whilst if the tool 5 is advanced in the direction A at a lesser cutting depth P, the peripheral portion 14 occupies a less extended depth P1.

As shown in Figure 6, a panel 1 that has a peripheral portion 14 compressed for a certain depth P1 can be directly edge-banded by an edge-banding unit 18 of conventional type, for example comprising a supporting plate 19, an applying roller 20 that presses a finishing strip 21 against the free face of the compressed peripheral portion 14 that provides a sufficiently stable support. Upstream of the applying roller 20 there is provided a distributing roller 22 that is arranged for distributing a suitable layer of glue on the compressed peripheral portion 14 before the finishing strip 21 is pressed against the peripheral portion 14 whilst the panel 1 is moved along a work direction B.

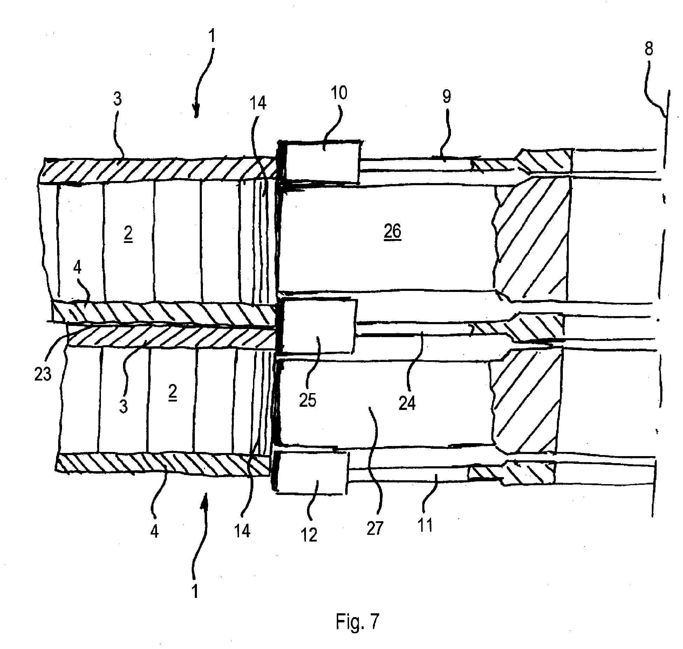

With reference to Figure 7, there is shown a tool embodiment that is particularly suitable when two panels 1 have to be machined that are superimposed and glued one to the other by a fixing layer 23. The first tool part 9 is arranged facing the first laminar element 3 of one of the panels 1 and the second tool part 11 is arranged facing the second laminar element 4 of the other panel 1. Between the first tool part 9 and the second tool part 11 there is interposed a further tool part 24 that is peripherally provided with a first cutting part 25 that is arranged at the fixing layer 23 to cut at least the second laminar element 4 of a panel and the first laminar element 3 of the other panel 1. Between the first tool part 9 and the further tool part 24 there is interposed a first pressing element 26 and between the further tool part 24 and the second tool part 11 there is interposed a second pressing element 27.

The first pressing element 26 and the second pressing element 27 are structurally similar to the pressing element 13 and have the same function as the latter.

## Claims

1. Tool, comprising:
- a tool body (6) that is suitable for being mounted on a machine for machining panels for rotating around an own axis (8), wherein said body (6) comprises a first tool part (9) and a second tool part (11);
- cutting elements (10, 12; 10, 12, 25) arranged on the periphery of said first tool part (9) and of said second tool part (11) for removing parts (3, 4; 3, 4, 23, 3, 4) of a panel (1) to be cut, wherein said cutting elements (10, 12; 10, 12, 25) are arranged in peripheral crowns spaced apart from one another along said axis (8) for removing parts of laminar elements (3, 4; 3, 4, 23, 3, 4) of a panel (1) to be machined; and
- a non-cutting pressing element (13; 26, 27) interposed between at least two consecutive crowns along said axis (8) for compressing a peripheral part (14) of an internal honeycomb structure (2) of said panel (1);
wherein said non-cutting pressing element (13; 26, 27), said first tool part (9) and said second tool part (11) are splined on a same hub;
***characterised in that***
said pressing element (13; 26, 27) has a diameter substantially corresponding to, or greater than, the diameter of said first tool part (9) and of said second tool part (11) .

2. Tool according to claim 1, wherein said cutting elements (10, 12; 10, 12, 25) are part of disc-type milling cutters.

3. Tool according to claim 1, or 2, wherein said cutting elements (10, 12) of each crown belong respectively to a first axial tool portion (9) and to a second axial tool portion (11).

4. Tool according to claim 3, wherein between said first axial tool portion (9) and said second axial tool portion (11) there is interposed, along said axis (8), a single pressing element (13).

5. Tool according to claim 4, wherein said single pressing element (13) is substantially symmetrical to said axis (8).

6. Tool according to claim 4, or 5, wherein said single pressing element (13) has a substantially cylindrical shape.

7. Tool according to any one of claims 4 to 6, and further comprising revolving means, said revolving means being interposed between said pressing element (13) and said body (6) .

8. Tool according to claim 3, wherein between said first axial tool portion (9) and said second axial tool portion (11) there is interposed along said axis (8) a further axial tool portion (24).

9. Tool according to claim 8, wherein between said first axial tool portion (9) and said further axial tool portion (24) along said axis (8) there is interposed a first pressing element (26).

10. Tool according to claims 8, or 9, wherein between said further axial tool portion (24) and said second axial tool portion (11) along said axis (8) there is interposed a second pressing element (27).

11. Tool according to claim 9, or 10, wherein said first pressing element (26) and/or said second pressing element (27) are substantially symmetrical to said axis (8).

12. Tool according to any one of claims 9 to 11, wherein said first pressing element (26) and/or said second pressing element (27) have a substantially cylindrical shape.

13. Tool according to any one of claims 9 to 12, wherein said first pressing element (26) and/or said second pressing element (27) have substantially the same external diameter.

14. Tool according to any one of claims 9 to 13, and further comprising further revolving means, said further revolving means being interposed between said first pressing element (26) and/or said second pressing element (27) and said body (6) .

15. Method for edge-banding a panel (1) by means of a tool (5) according to any preceding claim, said panel (1) having an inner portion (2) with a compressible structure comprised between two laminar elements (3, 4) that define the widest faces thereof, comprising removing peripheral portions of each laminar element (3, 4; 3, 4, 23) for a certain depth (P) and compressing the inner portion (2) substantially of said depth, or more than said depth, so as to define a compressed part (14) that is suitable for acting as a support for a finishing strip (21).

16. Method according to claim 15, wherein said removing further comprises removing an interface zone (23) along which two superimposed panels (1) are joined together.

17. Method according to claim 16, wherein said compressing comprises compressing each said inner portion (2) of the respective said two panels (1).

## Patentansprüche

1. Werkzeug, umfassend:
- einen Werkzeugkörper (6), der geeignet ist, um an einer Maschine zur Bearbeitung von Platten montiert zu werden und zum Drehen um eine eigene Achse (8), wobei der Körper (6) einen ersten Werkzeugteil (9) und einen zweiten Werkzeugteil (11) umfasst;
- Schneidelemente (10, 12; 10, 12, 25), die an der Peripherie des ersten Werkzeugteils (9) und des zweiten Werkzeugteils (11) angeordnet sind, um Teile (3, 4; 3, 4, 23, 3, 4) einer zu schneidenden Platte (1) zu entfernen, wobei die Schneidelemente (10, 12; 10, 12, 25) in peripheren Kronen angeordnet sind, die entlang der Achse (8) voneinander beabstandet sind, um Teile von laminaren Elementen (3, 4; 3, 4, 23, 3, 4) einer zu bearbeitenden Platte (1) zu entfernen; und
- ein nicht schneidendes Presselement (13; 26, 27), das zwischen wenigstens entlang der Achse (8) aufeinander folgenden Kronen angeordnet ist, um einen peripheren Teil (14) einer internen Wabenstruktur (2) der Platte (1) zusammen zu drücken;
wobei das nichtschneidende Presselement (13; 26, 27), der erste Werkzeugteil (9) und der zweite Werkzeugteil (11) auf einer gleichen Nabe verkeilt sind;
**dadurch gekennzeichnet, dass**
das Presselement (13; 26, 27) einen Durchmesser hat, der im Wesentlichen dem Durchmesser des ersten Werkzeugteils (9) und dem des zweiten Werkzeugteils (11) entspricht oder größer als dieser ist.

2. Werkzeug nach Anspruch 1, wobei die Schneidelemente (10, 12; 10, 12, 25) Teile scheibenartiger Fräsvorrichtungen sind.

3. Werkzeug nach Anspruch 1 oder 2, wobei die Schneidelemente (10, 12) jeder Krone zu einem ersten axialen Werkzeugabschnitt (9) bzw. einem zweiten axialen Werkzeugabschnitt (11) gehören.

4. Werkzeug nach Anspruch 3, wobei zwischen dem ersten axialen Werkzeugabschnitt (9) und dem zweiten axialen Werkzeugabschnitt (11) entlang der Achse (8) ein einzelnes Presselement (13) angeordnet ist.

5. Werkzeug nach Anspruch 4, wobei das einzelne Presselement (13) im Wesentlichen symmetrisch zu der Achse (8) ist.

6. Werkzeug nach Anspruch 4 oder 5, wobei das einzelne Presselement (13) eine im Wesentlichen zylindrische Gestalt hat.

7. Werkzeug nach einem Ansprüche 4 bis 6 und ferner umfassend drehende Mittel, wobei die drehenden Mittel zwischen dem Presselement (13) und dem Körper (6) angeordnet sind.

8. Werkzeug nach Anspruch 3, wobei zwischen dem ersten axialen Werkzeugabschnitt (9) und dem zweiten axialen Werkzeugabschnitt (11) entlang der Achse (8) ein weiterer axialer Werkzeugabschnitt (24) angeordnet ist.

9. Werkzeug nach Anspruch 8, wobei zwischen dem ersten axialen Werkzeugabschnitt (9) und dem weiteren axialen Werkzeugabschnitt (24) entlang der Achse (8) ein erstes Presselement (26) angeordnet ist.

10. Werkzeug nach Anspruch 8 oder 9, wobei zwischen dem weitern axialen Werkzeugabschnitt (24) und dem zweiten axialen Werkzeugabschnitt (11) entlang der Achse (8) ein zweites Presselement (27) angeordnet ist.

11. Werkzeug nach Anspruch 9 oder 10, wobei das erste Presselement (26) und/oder das zweite Presselement (27) im Wesentlichen symmetrisch zu der Achse (8) ist/sind.

12. Werkzeug nach einem der Ansprüche 9 bis 11, wobei das erste Presselement (26) und/oder das zweite Presselement (27) eine im Wesentlichen zylindrische Gestalt hat/haben.

13. Werkzeug nach einem der Ansprüche 9 bis 12, wobei das erste Presselement (26) und/oder das zweite Presselement (27) im Wesentlichen den gleichen Außendurchmesser hat/haben.

14. Werkzeug nach einem der Ansprüche 9 bis 13 und ferner umfassend weitere drehende Mittel, wobei die weitern drehenden Mittel zwischen dem ersten Presselement (26) und/oder dem zweiten Presselement (27) und dem Körper (6) angeordnet sind.

15. Verfahren zum Kantenumleimen einer Platte (1) mittels eines Werkzeugs (5) nach einem vorstehenden Anspruch, wobei die Platte (1) einen inneren Bereich (2) mit einer zusammendrückbaren Struktur hat, die zwischen zwei laminaren Elementen (3, 4) umfasst ist, welche deren weitesten Flächen definieren, umfassend das Entfernen peripherer Abschnitte jedes laminaren Elements (3, 4; 3, 4, 23) um eine gewisse Tiefe (P) und das Zusammendrücken des inneren Bereichs (2) um im Wesentlichen diese Tiefe oder um mehr als diese Tiefe, um einen zusammengedrückten Teil (14) festzulegen, der geeignet ist, um als Träger für einen Abdeckstreifen (21) zu dienen.

16. Verfahren nach Anspruch 15, wobei das Entfernen ferner das Entfernen einer Grenzzone (23) umfasst, entlang der zwei überlagerte Platten (1) miteinander verbunden sind.

17. Verfahren nach Anspruch 16, wobei das Zusammendrücken das Zusammendrücken jedes inneren Bereichs (2) der jeweiligen beiden Platten (1) umfasst.

## Revendications

1. Outil, comprenant :
- un corps d'outil (6) qui est adapté pour être monté sur une machine pour usiner des panneaux en vue d'une rotation autour d'un axe propre (8), dans lequel ledit corps (6) comprend une première partie d'outil (9) et une seconde partie d'outil (11) ;
- des éléments de coupe (10, 12 ; 10, 12, 25) agencés sur la périphérie de ladite première partie d'outil (9) et de ladite seconde partie d'outil (11) pour retirer des parties (3, 4 ; 3, 4, 23, 3, 4) d'un panneau (1) à couper, dans lequel lesdits éléments de coupe (10, 12 ; 10, 12, 25) sont agencés dans des couronnes périphérique espacées les unes des autres le long dudit axe (8) pour retirer des parties d'éléments lamellaires (3, 4 ; 3, 4, 23, 3, 4) d'un panneau (1) à usiner ; et
- un élément de pression non coupant (13 ; 26, 27) interposé entre au moins deux couronnes consécutives le long dudit axe (8) pour comprimer une partie périphérique (14) d'une structure interne en nid d'abeille (2) dudit panneau (1) ;
dans lequel ledit élément de pression non coupant (13 ; 26, 27), ladite première partie d'outil (9) et ladite seconde partie d'outil (11) sont cannelés sur un même moyeu ;
**caractérisé en ce que**
ledit élément de pression (13 ; 26, 27) a un diamètre correspondant sensiblement au ou supérieur au diamètre de ladite première partie outil (9) et de ladite seconde partie d'outil (11).

2. Outil selon la revendication 1, dans lequel les éléments de coupe (10, 12 ; 10, 12, 25) font partie de fraises de type disque.

3. Outil selon la revendication 1 ou 2, dans lequel lesdits éléments de coupe (10, 12) de chaque couronne appartiennent respectivement à une première portion d'outil axiale (9) et à une seconde portion d'outil axiale (11).

4. Outil selon la revendication 3, dans lequel un élément de pression unique (13) est interposé entre ladite première portion d'outil axiale (9) et ladite seconde portion d'outil axiale (11), le long dudit axe (8).

5. Outil selon la revendication 4, dans lequel ledit élément de pression unique (13) est sensiblement symétrique audit axe (8).

6. Outil selon la revendication 4 ou 5, dans lequel ledit élément de pression unique (13) a une forme sensiblement cylindrique.

7. Outil selon l'une quelconque des revendications 4 à 6, et comprenant en outre des moyens de révolution, lesdits moyens de révolution étant interposés entre ledit élément de pression (13) et ledit corps (6).

8. Outil selon la revendication 3, dans lequel une portion d'outil axiale supplémentaire (24) est interposée entre ladite première portion d'outil axiale (9) et ladite seconde portion d'outil axiale (11), le long dudit axe (8).

9. Outil selon la revendication 8, dans lequel un premier élément de pression (26) est interposé entre ladite première portion d'outil axiale (9) et ladite portion d'outil axiale supplémentaire (24), le long dudit axe (8).

10. Outil selon les revendications 8 ou 9, dans lequel un second élément de pression (27) est interposé entre ledit ladite portion d'outil axiale supplémentaire (24) et ladite seconde portion d'outil axiale (11), le long dudit axe (8).

11. Outil selon la revendication 9 ou 10, dans lequel ledit premier élément de pression (26) et/ou ledit second élément de pression (27) sont sensiblement symétriques audit axe (8).

12. Outil selon l'une quelconque des revendications 9 à 11, dans lequel ledit premier élément de pression (26) et/ou ledit second élément de pression (27) ont une forme sensiblement cylindrique.

13. Outil selon l'une quelconque des revendications 9 à 12, dans lequel ledit premier élément de pression (26) et/ou ledit second élément de pression (27) ont sensiblement le même diamètre externe.

14. Outil selon l'une quelconque des revendications 9 à 13, et comprenant en outre des moyens de révolution supplémentaires, lesdits moyens de révolution supplémentaires étant interposés entre ledit premier élément de pression (26) et/ou ledit second élément de pression (27) et ledit corps (6).

15. Procédé pour plaquer une bande de chant sur un panneau (1) au moyen d'un outil (5) selon l'une quelconque des revendications précédentes, ledit panneau (1) ayant une portion intérieure (2) avec une structure compressible comprise entre deux éléments lamellaires (3, 4) qui définissent les plus larges faces de ceux-ci, comprenant le fait de retirer des portions périphériques de chaque élément lamellaire (3, 4 ; 3, 4, 23) sur une certaine profondeur (P) et comprimer la portion intérieure (2) sensiblement de ladite profondeur, ou plus que ladite profondeur, de manière à définir une partie comprimée (14) qui est adaptée pour agir comme un support pour une bande de finition (21).

16. Procédé selon la revendication 15, dans lequel ledit retrait comprend en outre le fait de retirer une zone d'interface (23) le long de laquelle deux panneaux superposés (1) sont réunis ensemble.

17. Procédé selon la revendication 16, dans lequel ladite compression comprend le fait de comprimer chaque dite portion intérieure (2) desdits deux panneaux (1) respectifs.
